# EUROPEAN PATENT APPLICATION

(11) **EP 4 354 336 A1**
(43) Date of publication of application: **17.04.2024**
(21) Application number: 23202849.8
(22) Date of filing: 10.10.2023
(51) Int. Cl.: G06F 30/20, G06F 30/18, G06F 111/18, G06F 111/10, G06F 30/27

(54) **AUTOMATIC GENERATION OF AS-RUN RESULTS IN A THREE DEMENSIONAL MODEL USING AUGMENTED REALITY**

(30) Priority: 10.10.2022 US 202263414744 P; 10.10.2022 US 202263414739 P
(71) Applicant: Skytek, 2 Dublin (IE)
(72) Inventor: KIERNAN, Paul, Dublin, 2 (IE); BOURKE, Sarah, Dublin, 2 (IE)
(74) Representative: Maiwald GmbH

(57) **Abstract**

A method is provided. The method is implemented by an augmentation engine executing on a processor. The method includes implementing the augmented reality assembly, integration, and testing preparation procedure that causes installation of sensors with respect to a candidate under test and acquiring data and information during the augmented reality assembly, integration, and testing preparation procedure. The data and information includes placement information of the sensors. The method includes correlating the placement information of the sensors with a computer-aided design model to provide an updated model and automatically generating reports from the data and information and the updated model.

## Description

### PRIORITY BENEFIT

This application claims priority from U.S. Provisional Patent Application No. 63/414,739, entitled "AUTOMATIC GENERATION OF AN AUGMENTED REALITY ASSEMBLY, INTEGRATION, AND TESTING PREPARATION PROCEDURE FROM ENGINEERING MODELS," filed on October 10, 2022 and from U.S. Provisional Patent Application No. 63/414,744, entitled "AUTOMATIC GENERATION OF 'AS-RUN' RESULTS IN A MODEL USING AUGMENTED REALITY," filed on October 10, 2022, which are hereby incorporated by reference as if set forth in full in this application for all purposes.

### FIELD OF INVENTION

The present invention is related to augmented reality (AR) systems and methods for automated procedure generation that are viewable and executable in AR devices.

### BACKGROUND

Currently, an assembly and an integration of testing preparation procedures exist for an engineer on a factory/testing floor. The testing preparation procedures require an engineer to bond multiple (e.g., hundreds) of sensors to equipment, which will also be put under equipment tests. The sensors are used to take readings during the equipment tests (e.g. temperature, location, acceleration). The exact placement and orientation (e.g., on an X, Y, Z axis to measure acceleration) of the sensor is critical for successful equipment tests. The recording and logging of the exact placement and orientation is also critical for proof of job completion and verification of placement accuracy. Sensor placement as well as recording and logging thereof is prone to human error. Errors in sensor placement are extremely expensive to rectify and severely impact testing schedules. Further, errors in sensor placement aggravate difficulties in logging, reporting, and archiving activities, such that proof of job completion and accuracy of placement cannot be verified. Furthermore, factory/testing floors are both manual and lacking in the test execution details. A solution is needed.

### SUMMARY

According to one or more embodiments, a method is provided. The method is implemented by an augmentation engine executing on at least one processor. The method includes implementing the augmented reality assembly, integration, and testing preparation procedure that causes installation of one or more sensors with respect to a candidate under test and acquiring data and information during the augmented reality assembly, integration, and testing preparation procedure. The data and information includes placement information of the one or more sensors. The method includes correlating the placement information of the one or more sensors with a computer-aided design model to provide an updated model and automatically generating one or more reports from the data and information and the updated model.

According to one or more embodiments, the method can be implemented as a system, a computer program product, and/or an apparatus.

According to an embodiment of the present invention, a method implemented by an augmentation engine executing on at least one processor is presented, the method comprising:
implementing augmented reality assembly, integration, and testing preparation procedure that causes installation of one or more sensors with respect to a candidate under test;
acquiring data and information during the augmented reality assembly, integration, and testing preparation procedure, the data and information comprising placement information of the one or more sensors;
correlating the placement information of the one or more sensors with a computer-aided design model to provide an updated model; and
automatically generating one or more reports from the data and information and the updated model.
This method will be explained in more detail hereinafter in the context of particular, nonlimiting embodiments.

According to an embodiment, the augmentation engine prompts instructions within a user device based on the augmented reality assembly, integration, and testing preparation procedure to cause installation of the one or more sensors.

According to an embodiment, the placement information comprises one or more X, Y, Z coordinates corresponding to the one or more sensors.

According to an embodiment, the placement information comprises one or more X', Y', Z' axis orientation to the one or more sensor.

According to an embodiment, the data and information comprises an installation time, a sensor serial number, and a cabling serial number for the one or more sensors.

According to an embodiment, the data and information is acquired through images, photos, or videos taken by a camera of a user device.

According to an embodiment, the updated model comprises one or more exact location and orientation definitions of the one or more sensors relative to the computer-aided design model.

According to an embodiment, the updated model comprises reporting data for the one or more sensors, images of the one or more sensors, bar codes of the one or more sensors, attached cables for the one or more sensors, and placement timestamps the one or more sensors.

According to an embodiment, the one or more reports comprise as-run tabular report for each sensor placed of the one or more sensors.

According to an embodiment, the one or more reports comprise an as-run updated computer-aided design model of a test campaign result.

According to an embodiment of the present invention, a system is presented, which comprises
a memory storing processor executable code for an augmentation engine; and
at least one processor executing the processor executable code to implement the augmentation engine and cause the system to perform:
   implementing augmented reality assembly, integration, and testing preparation procedure that causes installation of one or more sensors with respect to a candidate under test;
   acquiring data and information during the augmented reality assembly, integration, and testing preparation procedure, the data and information comprising placement information of the one or more sensors;
   correlating the placement information of the one or more sensors with a computer-aided design model to provide an updated model; and
   automatically generating one or more reports from the data and information and the updated model.

According to an embodiment, the augmentation engine prompts instructions within a user device based on the augmented reality assembly, integration, and testing preparation procedure to cause installation of the one or more sensors.

According to an embodiment, the placement information comprises one or more X, Y, Z coordinates corresponding to the one or more sensors.

According to an embodiment, the placement information comprises one or more X', Y', Z' axis orientation to the one or more sensor.

According to an embodiment, the data and information comprises an installation time, a sensor serial number, and a cabling serial number for the one or more sensors.

According to an embodiment, the data and information is acquired through images, photos, or videos taken by a camera of a user device.

According to an embodiment, the updated model comprises one or more exact location and orientation definitions of the one or more sensors relative to the computer-aided design model.

According to an embodiment, the updated model comprises reporting data for the one or more sensors, images of the one or more sensors, bar codes of the one or more sensors, attached cables for the one or more sensors, and placement timestamps the one or more sensors.

According to an embodiment, the one or more reports comprise as-run tabular report for each sensor placed of the one or more sensors.

According to an embodiment, the one or more reports comprise an as-run updated computer-aided design model of a test campaign result.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 depicts a system according to one or more embodiments;
FIG. 2 depicts a method according to one or more embodiments;
FIG. 3 depicts a system according to one or more exemplary embodiments;
FIG. 4 depicts a neural network and a method performed in the neural network according to one or more embodiments;
FIG. 5 depicts a generation and augmentation engine according to one or more exemplary embodiments;
FIG. 6 depicts a method according to one or more embodiments;
FIG. 7 depicts an example model according to one or more embodiments;
FIG. 8 depicts a tabular report according to one or more embodiments;
FIG. 9 depicts an example environment from a perspective view according to one or more embodiments;
FIG. 10 depicts an example environment from a perspective view according to one or more embodiments;
FIG. 11 depicts an example environment from a device view according to one or more embodiments; and
FIG. 12 depicts an example environment from a device view according to one or more embodiments.

### DETAILED DESCRIPTION

Disclosed herein is generation and augmentation engines implemented by AR systems and methods. The generation and augmentation engines utilize a combination of AR real world analysis artificial intelligence and/or machine learning (AI/ML) for 'as-run' test results generation into a 3D model, in addition to documentation evidence (e.g., photos captured from AR integrated cameras) that represents a real world candidate under test (e.g., a system under test). According to one or more embodiments, the augmentation engine provides automatic generation of 'as-run' results in a model using AR to automate the extraction of real world positioning information during the execution of system testing procedures. The 'as-run' results can originate from an AR based assembly, integration, and testing (AIT) preparation procedure. For example, the augmentation engine 102, which includes AI/ML algorithms, is a processor executable code or software that is necessarily rooted in process operations by, and in processing hardware of, computers and devices of a system. One or more advantages, technical effects, and/or benefits of the augmentation engine can include improving efficiency of equipment tests and test preparation through automatic proof of job completion and accuracy of determination of sensor placement and orientation for final approval of a test campaign, to assist in analysis of the quality of test results through accuracy of sensor placements on the real world candidate/object in accordance to instructions provided to users (e.g., test engineers) within an AR environment. The results 'as-run' results are to be archived for future analysis when failures with the candidate under test occurs. The generation of automated results based on placement and orientation information from real world sensors within generated test reports is of key importance because conventional AIT test centers are both manual and lacking in the test execution details. The generation and augmentation engines improves and replaces conventional processes, provides new processes using AR for real world analysis, provides new processes for sensor placement position determinations, and provides new processes for generation of test results through automated updating of 3D models, representing the candidate under test.

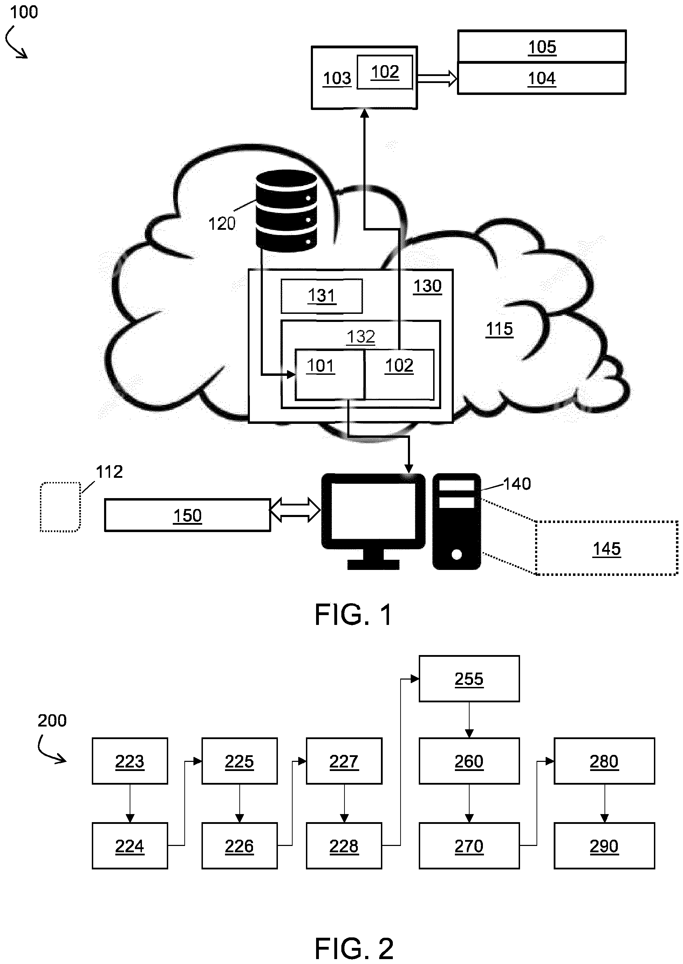

Turning to FIG. 1, a system 100 is shown implementing an AIT procedure generation engine 101 according to one or more embodiments. The AIT procedure generation engine 101 is an example of the generation and augmentation engines implemented by the AR systems and methods, which also includes an augmentation engine 102. The AIT procedure generation engine 101 and the augmentation engine 102 combine to generate and implement one or more AT AIT preparation procedures. All or part of the system 100 can be used to collect information and/or used to provide the AR AIT preparation procedure generation.

Generally, the system 100 includes a user device 103, a sensor 104, a sensor location 105 (e.g., a real world physical location and orientation), a network 115, a database 120, a computing sub-system 130 including a processor 131 and a memory 132, a computing device 140, a client 145 of the AIT procedure generation engine 101, and one or more inputs 150 that include a computer-aided design (CAD) model 151 of a candidate across which the AR AIT preparation procedure will be performed. The one or more inputs 150 can be sensor data comprising standard configuration settings and standard placements settings, test campaign procedure information, AR interactivity information, list of physical sensors, each of which is unstandardized information with respect to a standardized form of the AR AIT preparation procedure. The CAD model 151 can be an engineering model providing design, structural, and operational information for the candidate in a three-dimensional (3D) form. For example, The CAD model 151 can be 3D and include a definition of a candidate under test including sensor placement positions on physical hardware.

Further, the augmentation engine 102 can run on a separate devices or servers (e.g., on the computing sub-system 130 as a server instance or on the user device 103 as the client instance) and provide user interfaces or graphic user interfaces (GUIs) for implementing/executing the AR AIT preparation procedure generated by the AIT procedure generation engine 101. Note that each element and/or item of the system 100 is representative of one or more of that element and/or that item. Note further that the example of the system 100 shown in FIG. 1 can be modified to implement the embodiments disclosed herein and can similarly be applied using other system components and settings. The system 100 can include additional components. Additional components can include, for example, elements for wired or wireless connectors, processing and display devices, or other components.

In an example, the user device 103, the sensor 104, the database 120, the computing sub-system 130, and the computing device 140 can be any computing device, as noted herein, including software (e.g., the augmentation engine 102) and/or hardware (e.g., the processor 131 and the memory 132), with suitable circuits for transmitting and receiving signals and for controlling the other components of the system 100. In this way, the processor 131 and the memory 132 are representative of processors on all elements and/or items of the system 100. For example, the circuits can include input/output (I/O) communication interfaces that enables the user device 103 to receive signals (e.g., carrying AR AIT preparation procedures) from and/or transfer signals to the augmentation engine 102.

Accordingly, the user device 103 (e.g., an AR end user device for the AR AIT preparation procedure execution), the sensor 104, the database 120, the computing sub-system 130, and the computing device 140 (for automated the AR AIT preparation procedure generation) can be programed to execute computer instructions with respect to the AIT procedure generation engine 101 and the augmentation engine 102. The user device 103, the sensor 104, the database 120, the computing sub-system 130, and the computing device 140 can be any combination of software and/or hardware that individually or collectively store, execute, and implement the AIT procedure generation engine 101 and the augmentation engine 102 functions thereof. As an example, the memory 132 stores these instructions of the AIT procedure generation engine 101 and the augmentation engine 102 for execution by the processor 131 so that the computing sub-system 130 can receive and process the CAD model 151.

By way of example, the memory 132 can store as part of the AIT procedure generation engine 101 representations of installation instructions in extensible markup language (XML) file as 'templates'. From these templates, and in combination with details of the sensors 104 (e.g., the sensor locations 105 from the CAD model 151) a procedure is generated in a format that is interpreted by the augmentation engine 102 (e.g., a run time engine) for the user device 103 (e.g., an AR display running on a HoloLens device). By way of example, the augmentation engine 102 is shown as operating on the computing sub-system 130 and the user device 103 to illustrate the versatility of the augmentation engine 102 by being configured to have separate instances that communicate therebetween (e.g., where a server instance operates on the computing sub-system 130 and a client instance operates on the user device 103). The client 145 can be an AR procedure authoring web client for the AR AIT preparation procedure generation.

Further, the system 100, the network 115, the computing sub-system 130, and the computing device 140 can be an electronic, computer framework comprising and/or employing any number and combination of computing device and networks utilizing various communication technologies, as described herein. The system 100, the network 115, the computing sub-system 130, and the computing device 140 can be easily scalable, extensible, and modular, with the ability to change to different services or reconfigure some features independently of others. By way of example, the computing sub-system 130 and the computing device 140 execute the AIT procedure generation engine 101 and the client 145, respectively, for authoring the AR AIT preparation procedures separate from the user device 103. The user device 103 accesses through the network 115 and implements the AR AIT preparation procedures.

The network 115 can be a wired network, a wireless network, or include one or more wired and wireless networks. According to an embodiment, the network 115 is an example of a short-range network (e.g., local area network (LAN), or personal area network (PAN)). Information can be sent, via the network 115, between the user device 103, the sensor 104, the database 120, the computing sub-system 130, and/or the computing device 140 using any one of various short-range wireless communication protocols, for example Bluetooth, Wi-Fi, Zigbee, Z-Wave, near field communications (NFC), ultra-band, Zigbee, or infrared (IR). Further, the network 115 can also represent one or more of an Intranet, a local area network (LAN), a wide area network (WAN), a metropolitan area network (MAN), a direct connection or series of connections, a cellular telephone network, or any other network or medium capable of facilitating communication. Information can be sent, via the network 115, using any one of various long-range wireless communication protocols (e.g., TCP/IP, HTTP, 3G, 4G/LTE, or 5G/New Radio). Note that, for the network 115, wired connections can be implemented using Ethernet, Universal Serial Bus (USB), RJ-11 or any other wired connection and wireless connections can be implemented using Wi-Fi, WiMAX, and Bluetooth, infrared, cellular networks, satellite or any other wireless connection methodology.

The computing device 140 can be, for example, a stationary/standalone device, a base station, a desktop/laptop computer, or other authoring device (e.g., render an authoring interface). The computing sub-system 130 can be, for example, implemented as a physical server on or connected to the network 115 or as a virtual server in a public cloud computing provider (e.g., Amazon Web Services (AWS) ^{®}) of the network 115. The user device 103 can be, for example, a smart phone, a smartwatch, a tablet, or a headset, which is equipped with a display and a camera. According to one or more embodiments, the user device 103 can be a AR headset that overlays images and instructions of the AR AIT preparation procedures. Additionally, the user device 103 can be configured to capture images or record activity while in use (e.g., implementing the AR AIT preparation procedure).

The sensor 104 can include, for example, one or more transducers configured to convert one or more environmental conditions into an electrical signal, such that different types of data are observed/obtained/acquired. For example, the sensor 104 can include one or more of a temperature sensor (e.g., thermocouple), a pressure sensor, a voltage sensor, a current sensor, an accelerometer, and a microphone. By way of example, the sensors 103 are defined within the CAD model 151 and mapped to real world locations and orientations within the CAD model 151 so that the sensors can perform telemetry. According to one or more technical effects, benefits, and advantages, the AIT procedure generation engine 101 can be applied to space engineering by determining and coordinating exact placements of the sensors 104 so that the sensors 104 correctly ascertain vibration data during a space launch.

The processor 131 can be any microprocessor, graphics processing unit, central processing unit, field programmable gate array (FPGA), integrated circuit, or other processors. The processor 131, in executing the AIT procedure generation engine 101, can be configured to receive, process, and manage the one or more inputs 150 and the CAD model 151 and communicate the data to the memory 131 or database 120 for storage. The memory 132 is any non-transitory tangible media, for example magnetic, optical, or electronic memory (e.g., any suitable volatile and/or non-volatile memory, for example random-access memory or a hard disk drive). The memory 132 stores the computer instructions (of the AIT procedure generation engine 101) for execution by the processor 131.

According to one or more embodiments, the AIT procedure generation engine 101 provides one or more user interfaces of GUIs as an authoring environment for authoring the AR AIT preparation procedures, which can then be displayed by the user device 103 in a viewer environment within one or more additional user interfaces of GUIs. For example, the authoring environment is where an author can view and edit a generated procedure with links of AR sensor elements to installation steps on a spacecraft.

According to one or more embodiments, the augmentation engine 102 automatically generates images and instructions of the AR AIT preparation procedures (e.g., sensor installation procedures) for display within the user device 103 (e.g., an AR headset). For example, according to the AR AIT preparation procedures generated by the AIT procedure generation engine 101, the augmentation engine 102 causes the user device 103 to display, for each sensor 104 to be installed, an installation instruction with information on the sensor 104. The installation instruction can include the sensor location 105, which can be a combination of a location (e.g., X, Y, Z coordinates) within a facility and on a candidate and a sensor orientation (e.g., X', Y', Z' axis orientation) on the candidate. The location can be determined by device tracking of user device 103. Generally, device tracking is a process for identifying a location of the user device 103 or the sensor 104, whether stationary or moving. The augmentation engine 102 or the user device 103 (or other element of the system) can implement device tracking by a number of technologies, for example the multilateration, global system for mobile communications, global positioning systems, triangulation calculations, and other location based tracking schemes. The candidate can be physical equipment that is undergoing an AIT campaign. Examples of the physical equipment can include, but are not limited to, spacecraft, a launcher, a satellite, and manufactured equipment. According to one or more embodiments, the generated AR AIT preparation procedure can include a visual guide to a location, where a guide line is presented in the AR field of view of the user device 103 from where the user is standing to an exact location for a sensor placement.

According to one or more embodiments, according to the AR AIT preparation procedures generated by the AIT procedure generation engine 101, the augmentation engine 102 causes the user device 103 to display an element of the CAD model 151 overlaid on the candidate. According to one or more embodiments, according to the AR AIT preparation procedures generated by the AIT procedure generation engine 101, the augmentation engine 102 causes the user device 103 to provide an AR highlight in a field of view of a user and an element overlay of the CAD model 151 over the candidate. The AR highlight can include a virtual marker for the sensor location 105 (i.e., the location on the physical test equipment and the sensor orientation). Further, using the AR highlight, a path to the sensor location 105 from a present location or a current location of the user device 103 can be displayed. According to one or more embodiments, according to the AR AIT preparation procedures generated by the AIT procedure generation engine 101, the augmentation engine 102 causes the user device 103 to record serial numbers of the sensor 104 placed at the sensor location 105.

In an example operation, the AIT procedure generation engine 101 upon execution provides automatic generation of the AR AIT preparation procedures based on the CAD model 151 and distribute those procedures to the user device 103.

In an example operation, the augmentation engine 102 upon execution provides automatic generation of 'as-run' results in the CAD model 151 using AR for real world information extraction and AI/ML for 'as-run' report generation. The 'as-run' results can originate from an AR AIT preparation procedure, for example from information and data provided by the user device 103. Accordingly, the generated/distributed AR AIT preparation procedure causes the user device 103 to automatically capture one or more photos, for example of a placed sensor (e.g., the sensor 104), barcode/serial numbers of sensors and connected cable identifiers on the candidate to support reporting of location and orientation. In addition, real world sensor coordinate positions X, Y, Z and orientation X', Y', Z' are calculated and correlated to a 3D model (e.g., the CAD model 151), which represents the candidate under test.

Turning now to FIG. 2, a method 200 (e.g., performed by at least the augmentation engine 102 of FIG. 1) is illustrated according to one or more exemplary embodiments. The method 200 addresses a need to improving processes for automatically capturing 'as-run' results within the CAD model 151 (e.g., when a user performs a sensor installation process using the user device 103, according to a AR AIT preparation procedure.

The method 200 begins at block 223, where the AIT procedure generation engine 101 receives the CAD model 151. The receiving of the CAD model 151 can include accessing the CAD model 151 by the client 145. The CAD model 151 can include unstandardized information with respect to a standardized form of the AR AIT preparation procedure.

At block 224, the AIT procedure generation engine 101 process the CAD model 151. In processing the CAD model 151, the AIT procedure generation engine 101 determines the one or more sensor locations 105 (e.g., an exact location (e.g., X, Y, Z coordinates) and orientation (e.g., X', Y', Z' axis orientation) of the sensor 104 on the candidate described by the CAD model 151). According to one or more embodiments, the processing of the CAD model 151 can include performing a sensor analysis and calculations on the CAD model 151 to determine sensor types, sensor installation order, and sensor configuration/programming. For example, the AIT procedure generation engine 101 manipulates the unstandardized information of the CAD model 151 to determine what sensors are required for a particular AIT preparation procedure and how best to install these sensors.

At block 225, the AIT procedure generation engine 101 automatically defines test campaign procedure steps and AR interactivity. The test campaign procedure steps can include one or more actions that will need to be taken to comprehensively test aspects of the candidate. The AR interactivity can include linking the one or more sensor locations 105 p(e.g., locations and corresponding orientations), AR navigation guidelines, and CAD visualizations for each procedure step. By way of example, the AR navigation guidelines can include instructions for how to move to an installation location on the candidate. By way of example, the CAD visualizations can include images of the sensor 104 overlaying the candidate.

At block 226, the AIT procedure generation engine 101 determines a sensor list. The sensor list can include an identification of all the sensors 104 required for the particular AIT preparation procedure. According to one or more embodiments, the sensor list can include one or more physical sensors, sensor capabilities, and sensor barcodes that are installed during a test campaign combined with the CAD model 151 of the candidate on which the test campaign is being performed.

At block 227, the AIT procedure generation engine 101 generates an AR AIT preparation procedure from the test campaign procedure steps, the AR interactivity, and the sensor list. For example, the AIT procedure generation engine 101 manipulates the test campaign procedure steps, the AR interactivity, and the sensor list with the unstandardized information of the CAD model 151 to further generate the AR AIT preparation procedure. The AR AIT preparation procedure is provided in a standardized form applicable to any candidate, corresponding CAD model 151, and test campaign, thereby solving the problem of errors in sensor placement as described herein. The AR AIT preparation procedure can include one or more actions for setting up the sensors 105 on the candidate so the that the test campaign procedure steps can be implemented. The AR AIT preparation procedure can include instructions for sensor placement, instructions for reporting of the sensor locations 105, and/or instructions for capturing audio or images. At block 228, the AIT procedure generation engine 101 distributes the AR AIT preparation procedure. The AR AIT preparation procedure can be distributed by the system 101 for implementation by the augmentation engine 102 and for implementation on the user device 103.

At block 255, the augmentation engine 102 implements the AR AIT preparation procedure. According to one or more embodiments, implementing the AR AIT preparation procedure by the augmentation engine 102 prompts instructions within the user device 103 that causes installation of the sensors 104 at the one or more sensor locations 105 with respect to the test campaign procedure steps.

At block 260, where the augmentation engine 102 acquires data and information from the user device 103 regarding the implemented AR AIT preparation procedure. According to one or more embodiments, for each installed sensor, the augmentation engine 102 captures a physical location (e.g., X, Y, Z coordinates) of the sensor 104 placed on the sensor location 105 (i.e., the candidate being tested) through real world mapping of the user device 103. Further, for each installed sensor, the augmentation engine 102 captures orientations (e.g., X', Y', Z' axis orientation) of the sensor 104 placed on the sensor location 105 through real world image or video analysis captured by the user device 103. The augmentation engine 102 can capture additional on the installed sensor 104, such of installation time, sensor serial number, cabling serial numbers, through images, photos, or videos taken by a camera of the user device 103. The augmentation engine 102 can store data and information from the user device 103 in the database 120 and/or the memory 132. The data and information from the user device 103 is, in turn, ready for 'as-run' report processing and generation by the augmentation engine 102.

At block 270, the augmentation engine 102 automatically generates a report. The report can include an 'as-run' tabular report for each sensor placed, with details on time placed, position placed, orientation of sensor, and other supporting information generated from data captured by the user device 103.

At block 280, the augmentation engine 102 perform correlation operations. Correlation operations can include correlating captured real-world positions of the candidate with the CAD model 151. Further, based on the correlation of the real-world positions and the CAD model 151 for each installed sensor 104, the augmentation engine 102 automatically updates (and/or regenerates) the CAD model 151. The updated CAD model can include enhancements, for example a three-dimensional definition of exact location and orientation of each sensor relative to the updated CAD model. Further, the updated CAD model can include additional reporting data for each sensor, for example images taken of the sensor 104, bar codes of the sensor 104, attached cables, placement timestamp, etc.

At block 290, the augmentation engine 102 packages the report. According to one or more embodiments, a package of the report can include the automatically generated 'as-run' report with the 'as-run' updated CAD model for delivery as part of test campaign results. The package can be archived for future analysis.

Any of the operations of the AIT procedure generation engine 101 and augmentation engine 102 can utilize ML/AI. For example, the AIT procedure generation engine 101 can utilize Al algorithms with heuristics and ML leveraging convolutional neural networks (CNN) to provide the AR AIT preparation procedure generation. For example, the augmentation engine 102 can utilize ML and a ML model to process as input a video feed from the user device 103, a current position and orientation of the user device 103, and a spatial mapping of an environment (also provided by the user device 103) to detect and extract sensors placements on a candidate and to generate an output including real-world X, Y, Z position and X', Y', Z' orientation for the sensors 104 (e.g., further processing by augmentation engine 102 correlates the output to a 3D model or a related CAD model).

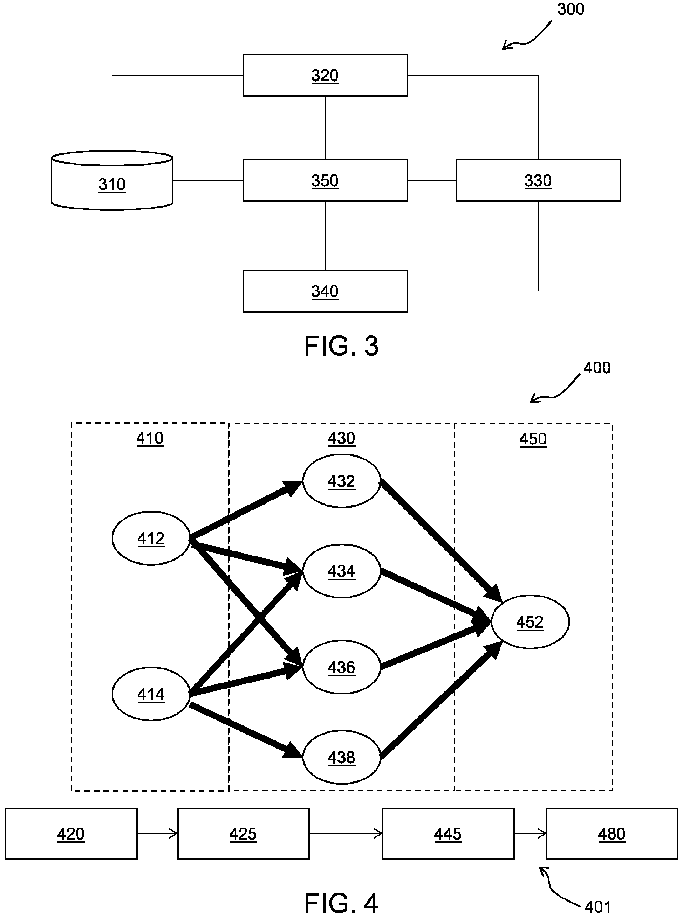

FIG. 3 illustrates a graphical depiction of an system 300 (e.g., an artificial intelligence system) according to one or more embodiment. FIG. 4 illustrates an example of a neural network 400 and a block diagram of a method 401 performed in the neural network 400 according to one or more embodiments. The description of FIGS. 3-4 is made with reference to FIGS. 1-2 for ease of understanding where appropriate.

The system 300 can be utilized by the augmentation engine 102. As shown, the system 300 includes data 310 (e.g., the one or more inputs 150 and the CAD model 151) that can be stored on a memory or other storage unit. Further, the system 300 includes a machine 320 and a model 330, which represent software aspects of the augmentation engine 102 of FIGS. 1-2 (e.g., ML/AI algorithm therein). The machine 320 and the model 330 together can generate an outcome 340. The system 300 can include hardware 350, which can represent the user device 103, the sensor 104, the database 120, the computing sub-system 130, and/or the computing device 140 of FIG. 1. In general, the AI/ML algorithms of the system 300 (e.g., as implemented by the augmentation engine 102 of FIGS. 1-2) operate with respect to the hardware 350, using the data 310, to train the machine 320, build the model 330, and predict the outcomes 340.

For instance, the machine 320 operates as software controller executing on the hardware 350. The data 310 can be on-going data (i.e., data that is being continuously collected) or output data associated with the hardware 350. The data 310 can also include currently collected data (e.g., position of the sensor 104, position of the user device 103, etc.), historical data, or other data from the hardware 350; can include measurements; can include a sensor data (e.g., provided by the sensor 104); feedback data (e.g., provided by the user device 103); and can be related to the hardware 350. The data 310 can be divided by the machine 320 into one or more subsets. The data 310 can also include a video feed from the user device 102, current position and orientation of the user device 102and also the spatial mapping of the environment as captured by the AR head mount display as input into the model. The spatial mapping provides a set of triangle meshes that represent surfaces in the world around the user device 102. The ML model is trained to receive the video feed, the current position and orientation, and the spatial mapping and as inputs and output real world detected sensor X, Y, Z position and X', Y', Z' orientation information.

Further, the machine 320 trains, which can include an analysis and correlation of the data 310 collected. The resultant generated sensor information is correlated with the CAD model 151 (e.g., the original CAD/3D model) of the candidate under test so that a mapping of virtual positions in the CAD model are mapped to real world positions. The system 300 then inserts a model representation of the sensors 104 into a 3D model to provide 'as-run' updates of the test. Additional processes or ML output can include, but are not limited to, combining supporting data timestamps, photos, barcodes, and serial numbers of connected cables to sensors to generate separate tabular reports (e.g., in addition to insertion as metadata for automatically inserted sensors into the 'as-run' CAD/3D model).

Moreover, the model 330 is built on the data 310. Building the model 330 can include physical hardware or software modeling, algorithmic modeling, and/or other hardware that seeks to represent the data 310 (or subsets thereof) that has been collected and trained. In some aspects, building of the model 330 is part of self-training operations by the machine 320. The model 330 can be configured to model the data 310 collected from the hardware 350 to generate the outcome 340 achieved by the hardware 350. Predicting the outcomes 340 (of the model 330 associated with the hardware 350) can utilize a trained model. Thus, for the system 300 to operate as described, the ML/AI algorithms therein can include neural networks. In general, a neural network is a network or circuit of neurons, or in a modern sense, an artificial neural network (ANN), composed of artificial neurons or nodes or cells. For example, an ANN involves a network of processing elements (artificial neurons) which can exhibit complex global behavior, determined by the connections between the processing elements and element parameters. These connections of the network or circuit of neurons are modeled as weights. A positive weight reflects an excitatory connection, while negative values mean inhibitory connections. Inputs are modified by a weight and summed using a linear combination. An activation function may control the amplitude of the output. For example, an acceptable range of output is usually between 0 and 1, or it could be -1 and 1. In most cases, the ANN is an adaptive system that changes its structure based on external or internal information that flows through the network.

In more practical terms, neural networks are non-linear statistical data modeling or decision-making tools that can be used to model complex relationships between inputs and outputs or to find patterns in data. Thus, ANNs may be used for predictive modeling and adaptive control applications, while being trained via a dataset. Note that self-learning resulting from experience can occur within ANNs, which can derive conclusions from a complex and seemingly unrelated set of information. The utility of artificial neural network models lies in the fact that they can be used to infer a function from observations and also to use it. Unsupervised neural networks can also be used to learn representations of the input that capture the salient characteristics of the input distribution, and more recently, deep learning algorithms, which can implicitly learn the distribution function of the observed data. Learning in neural networks is particularly useful in applications where the complexity of the data or task. For the system 300, the AI/ML algorithms therein can include neural networks that are divided generally according to tasks to which they are applied. These divisions tend to fall within the following categories: regression analysis (e.g., function approximation) including time series prediction and modeling; classification including pattern and sequence recognition; novelty detection and sequential decision making; data processing including filtering; clustering; blind signal separation, and compression.

According to one or more embodiments, the neural network can implement a convolutional neural network (CNN) architecture or other neural networks. The CNN can be configurable with respect to a number of layers, a number of connections (e.g., encoder/decoder connections), a regularization technique (e.g., dropout); and an optimization feature. The CNN architecture is a shared-weight architecture with translation invariance characteristics where each neuron in one layer is connected to all neurons in the next layer. The regularization technique of the CNN architecture can take advantage of the hierarchical pattern in data and assemble more complex patterns using smaller and simpler patterns. If the neural network implements the CNN architecture, other configurable aspects of the architecture can include a number of filters at each stage, kernel size, a number of kernels per layer. According to one or more embodiments, the machine 301 is trained CNN where it has weights/values assigned to the nodes in the CNN so that a CAD model is an input and output of the CNN is extracted sensor placement positions and sensors themselves.

Turning now to FIG. 4, an example of a neural network 400 and a block diagram of a method 401 performed in the neural network 400 are shown according to one or more embodiments. The neural network 400 operates to support implementation of the AI/ML algorithms (e.g., as implemented by the augmentation engine 102 of FIGS. 1-2) described herein. The neural network 400 can be implemented in hardware, for example the machine 320 and/or the hardware 350 of FIG. 3.

In an example operation, the augmentation engine 102 of FIG. 1 includes collecting the data 310 from the hardware 350. In the neural network 400, an input layer 410 is represented by a plurality of inputs (e.g., inputs 412 and 414 of FIG. 4). With respect to block 420 of the method 401, the input layer 410 receives the inputs 412 and 414. The inputs 412 and 414 can include any data as described herein, for example data and information from the user device 103, test campaign procedure steps, AR interactivity, sensor lists, video feed, current position and orientation, spatial mapping, real world detected sensor X, Y, Z position and X', Y', Z' orientation information, data timestamps, photos, barcodes, and serial numbers of connected cables to sensors. For example, the collecting of the data 310 can be an aggregation of the data, from one or more procedure recordings of the hardware 350 into a dataset (as represented by the data 310).

At block 425 of the method 401, the neural network 400 encodes the inputs 412 and 414 utilizing any portion of the data 310 (e.g., the dataset and predictions produced by the system 300) to produce a latent representation or data coding. The latent representation includes one or more intermediary data representations derived from the plurality of inputs. According to one or more embodiments, the latent representation is generated by an element-wise activation function (e.g., a sigmoid function or a rectified linear unit) of the augmentation engine 102 of FIG. 1. As shown in FIG. 4, the inputs 412 and 414 are provided to a hidden layer 430 depicted as including nodes 432, 434, 436, and 438. The neural network 400 performs the processing via the hidden layer 430 of the nodes 432, 434, 436, and 438 to exhibit complex global behavior, determined by the connections between the processing elements and element parameters. Thus, the transition between layers 410 and 430 can be considered an encoder stage that takes the inputs 412 and 414 and transfers it to a deep neural network (within layer 430) to learn some smaller representation of the input (e.g., a resulting the latent representation).

The deep neural network can be a CNN, a long short-term memory neural network, a fully connected neural network, or combination thereof. This encoding provides a dimensionality reduction of the inputs 412 and 414. Dimensionality reduction is a process of reducing the number of random variables (of the inputs 412 and 414) under consideration by obtaining a set of principal variables. For instance, dimensionality reduction can be a feature extraction that transforms data (e.g., the inputs 412 and 414) from a high-dimensional space (e.g., more than 10 dimensions) to a lower-dimensional space (e.g., 2-3 dimensions). The technical effects and benefits of dimensionality reduction include reducing time and storage space requirements for the data 310, improving visualization of the data 310, and improving parameter interpretation for ML. This data transformation can be linear or nonlinear. The operations of receiving (block 420) and encoding (block 425) can be considered a data preparation portion of the multistep data manipulation by the augmentation engine 102.

At block 445 of the method 410, the neural network 400 decodes the latent representation. The decoding stage takes the encoder output (e.g., the resulting the latent representation) and attempts to reconstruct some form of the inputs 412 and 414 using another deep neural network. In this regard, the nodes 432, 434, 436, and 438 are combined to produce in the output layer 450 an output 452, as shown in block 460 of the method 410. That is, the output layer 490 reconstructs the inputs 412 and 414 on a reduced dimension but without the signal interferences, signal artifacts, and signal noise. Examples of the output 452 include an generated AR AIT preparation procedure for a specific piece of equipment based on the CAD drawings and required set of sensors to be installed. The technical effects and benefits of the system 300, the neural network 400, and the method 401 can include improving efficiency of equipment tests and test preparation through automatically generating the AR AIT preparation procedure.

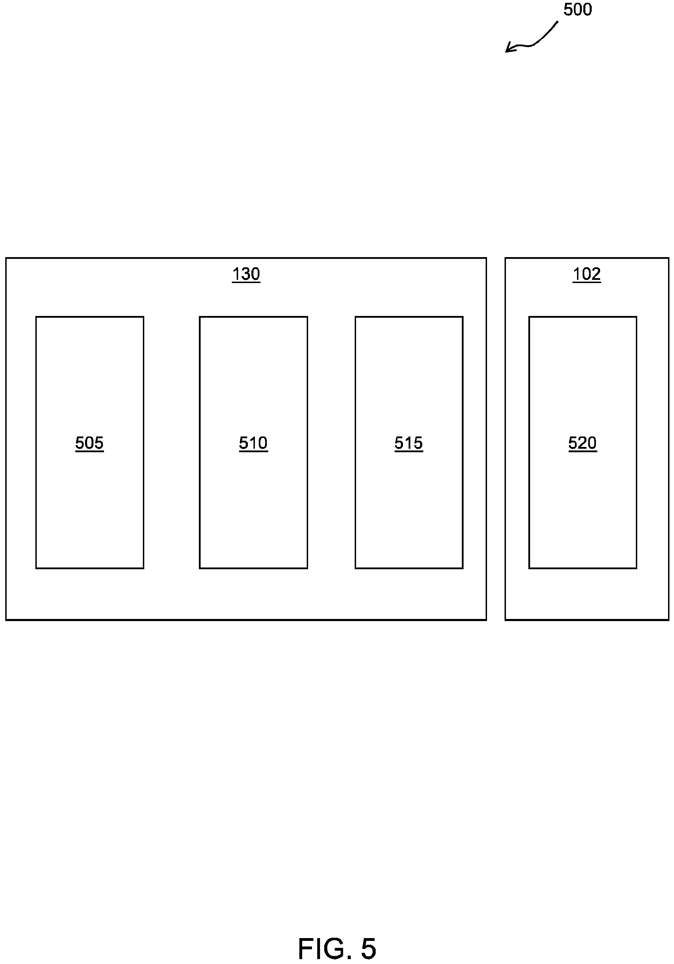

According to one or more embodiments, another example of the generation and augmentation engines (e.g., implemented by AR systems and methods for automated procedure generation that are viewable and executable in AR devices) is shown in FIG. 5.

FIG. 5 shows a generation and augmentation engine 500. The generation and augmentation engine 500 can include one or more multiple software instances stored and implemented across the system 100. For example, the generation and augmentation engine 500 can be implemented in a computer program, software, or firmware incorporated in a computer-readable medium for execution by a computer or processor. By way of example, the generation and augmentation engine 500 includes a AR procedure authoring web client 505, an authoring output 510, and a platform 515. The AR procedure authoring web client 505 and the authoring output 510 can be considered part of the AIT procedure generation engine 101 for the AR AIT preparation procedures generation. According to one or more embodiments, the platform 515 can be considered part of the AIT procedure generation engine 101 that works directly with aspects of the augmentation engine 102.

The AR procedure authoring web client 505 operates on the computing sub-system 130 or the computing device 140 to provide user interfaces or graphic user interfaces (GUIs) for authoring of the AR AIT preparation procedures. Accordingly, the AR procedure authoring web client 505 can include a configurator component, a manual component, one or more script engines (e.g., XMax, FBX, Jscript, and VB Script), and AR definitions for authoring of the AR AIT preparation procedures.

According to one or more embodiments, the authoring output 510 operates on the computing sub-system 130 or the computing device 140 to generate and manage files for the AR AIT preparation procedure. Examples of files include, but are not limited to, resource files, utility bundle files, procedure files, interactivity files, mobile files, and test sensor detention files. The platform 510 can present the files in the user interfaces or GUIs.

According to one or more embodiments, the platform 515 operates on the computing sub-system 130 or the computing device 140 to execute the AR AIT preparation procedure in connection with the user device 103. The platform 515 can provides runtime components (e.g., moblReplayer, WebRTC, etc.) and shared storage components. Further, the generation and augmentation engine 500 includes a platform 520 that can be considered as part of the augmentation engine 102. According to one or more embodiments, the platform 515 and the platform 520 can be considered part of the augmentation engine 102, where the platform 515 operates on the computing sub-system 130 and the platform 520 operates within the user device 103. By way of example, the platform 520 communicates and receives AR instructions from the platform 515 of the computing sub-system 130. The platform 520, upon execution, provides automatic generation of AR AIT preparation procedures via the user device 103.

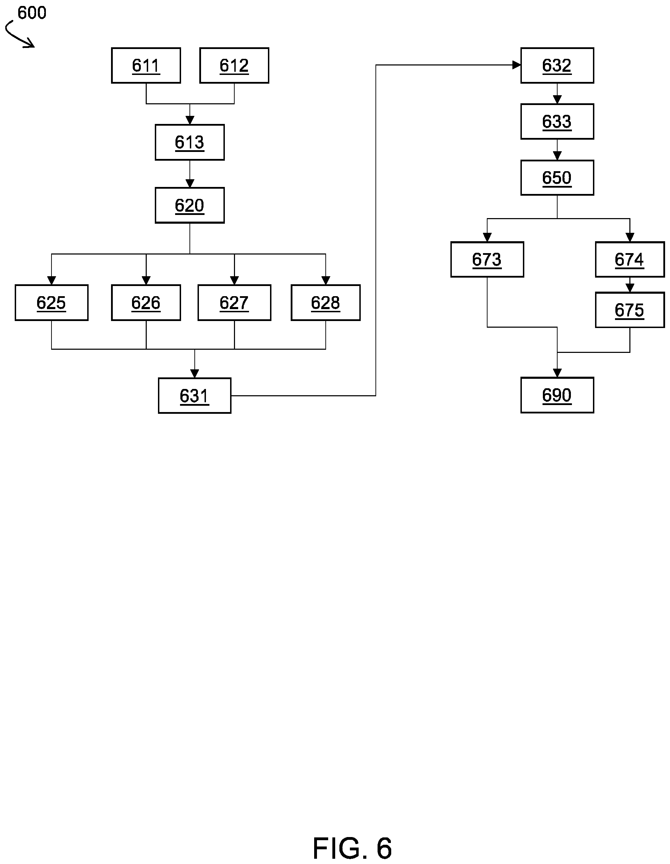

Turning now to FIG. 6, a method 600 (e.g., performed by the augmentation engine 102of FIG. 1) is illustrated according to one or more exemplary embodiments. The method 600 upon execution provides automatic generation of 'as-run' results in the CAD model 151 using AR as an input and the AI/ML model for processing for position/orientation sensor determination. The method 600 addresses a need to correctly log, report, and archive activities of an generated AR AIT preparation procedure by providing automatic generation of'as-run' results in the CAD model 151 using AR for real-world information capture and AI/ML for processing to extract sensor information.

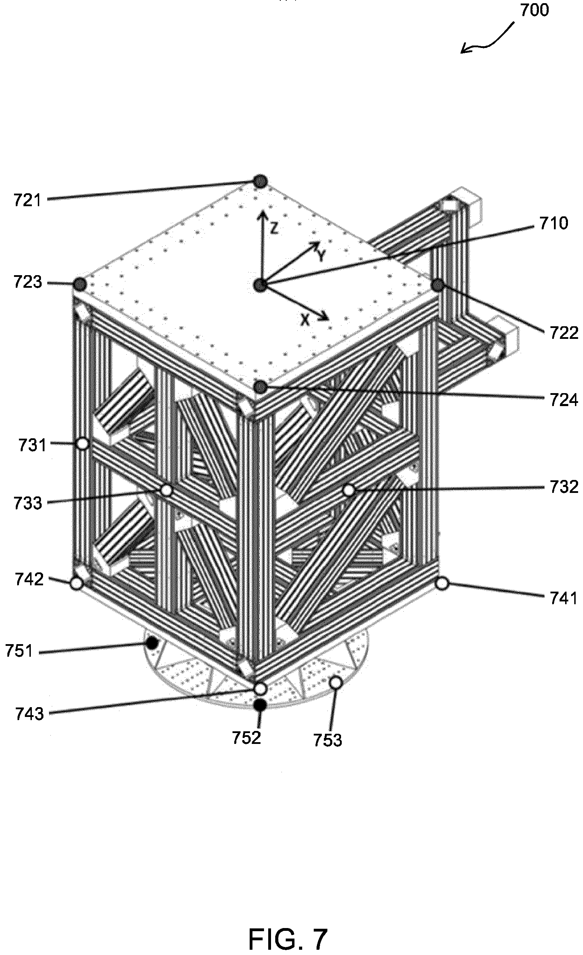

The method 600 begins at block 611, where the augmentation engine 102 receives the CAD model 151. In an example, a user (e.g., a design engineer) utilizes the computing device 140 to engineer and provide the CAD model 151 of a candidate under test, as well as provide the one or more inputs 150 and the CAD model 151 to the memory 131 or database 120 for storage. The CAD model 151 can be a three-dimensional and can include a description of the candidate under test that is located within the test/manufacturing facility, etc. FIG. 7 depicts an example model 700 according to one or more embodiments. The example model 700 is a CAD model extended with positions for one or more sensors 710, 721, 722, 723, 724, 731, 732, 733, 741, 742, 743, 751, 752, and 753 to be placed as defined by the AR AIT preparation procedure.

At block 612, the augmentation engine 102 defines one or more sensor installation procedures. According to one or more embodiments, the augmentation engine 102 receives one or more inputs from a user (e.g., a test engineer) that define procedures and details for sensor installation details.

At block 613, the user device 103 and/or the augmentation engine 102 correlates data, for example real-world coordinates to the CAD model 151. For example, a user wearing the user device 103 can traverse a testing facility while using the user device 103 or other device to scan a real-world environment of the test facility. The user device 103 and/or the augmentation engine 102 can correlate real-world placements of a candidate under test with the CAD model 151 so positions in the real-world can be mapped to coordinates in the CAD model 151. In this example, the user device 103 accumulates the correlated data (as each sensor 104 is installed).

At block 620, the user device 103 and/or the augmentation engine 102 provides AR AIT preparation procedure through one or more user interfaces and/or GUIs within a field of view of a user wearing the user device 103. Accordingly, the user wearing the user device 103 can take the one or more sensors 104 to the one or more sensor locations 105 and installed the one or more sensors 104 according to a correct location and orientation on the candidate (e.g., as guided by the AR AIT preparation procedure being shown in the user device 103).

At block 625, the user device 103 and/or the augmentation engine 102 records data. According to one or more embodiments, the user device 103 accumulates the recording data. For example, the user device 103 accumulates sensor data through real world video feed captured by a camera of the user device 103, current position and orientation determined by by device tracking technologies, and the spatial mapping of the environment as captured by the user device 103 (e.g., while the user installs the sensor 104 at the sensor location 105). For example, the user device 103 records one or more images, photos, or videos of the installed sensor 105. The user device 103 can utilize a built-in-camera as described herein. The user device 103, in addition takes one or more images, photos, can capture a barcode of the sensor and of connected cables to sensors, which can be placed by the user as evidence of placement.

At block 626, the user device 103 and/or the augmentation engine 102 determines location data. For example, the user device 103 captures a real-world video of the installed sensor 105. The location data is determined from video stream information, current position and orientation of the user device 103, and spatial mapping of the environment. By way of example, the augmentation engine 102 uses the AI/ML model to determine and output sensor X, Y, Z location data of the installed sensor 105. In this example, the user device 103 accumulates the location data as placement information (as each sensor 104 is installed).

At block 627, the user device 103 and/or the augmentation engine 102 receives orientation data. For example, the user device 103 captures a real-world video of the installed sensor 105. The orientation data is determined from video stream information, current position and orientation of the user device 103, and spatial mapping of the environment. By way of example, the augmentation engine 102 uses the AI/ML model to determine and output sensor X', Y', Z' orientation data of the installed sensor 105. In this example, the user device 103 accumulates the orientation data as placement information (as each sensor 104 is installed).

At block 628, the user device 103 and/or the augmentation engine 102 determines timestamp data. For example, the user device 103 captures a timestamp of the installed sensor 104. Further, the user device 103 accumulates the timestamp data (as each sensor 104 is installed).

At block 631, the user device 103 and/or the augmentation engine 102 determines a connection. According to one or more embodiments, the connect can be a cable (e.g., can be power and/or communication cables, as well as signal lines to portions of the sensor 104). For example, the augmentation engine 102 identifies that a cable is connected to power and/or communication by analyzing the video feed or by receiving a connection signal within the system 100 for the installed sensor 104. The connection can also be a wireless connection indicated by a light on the sensor 104. For example, the augmentation engine 102 identifies that the connection is established when the light of the sensor 104 is illuminated.

At block 632, the user device 103 and/or the augmentation engine 102 receives cable data of the installed sensor 104. The user device 103 can utilize the built-in-camera as described herein. The user device 103, in the one or more images, photos, or videos, can capture a barcode of each cable. In this example, the user device 103 accumulates the cable data (as each sensor 104 is installed).

At block 633, the user device 103 and/or the augmentation engine 102 transmits accumulated data. The accumulated data transmitted can include, by is not limited to, the timestamp data, the orientation data, the location data, the recording data, the sensor data, the placement data, the correlated data, and the cable data. According to one or more embodiments, since the user device 103 has accumulated the data, the accumulated data is transmitted from the user device to the network 115 and the augmentation engine 102 (such that 'as-run' processing can be performed). According to one or more embodiments, the augmentation engine 102 can transmit the accumulated data for storage to the database 120.

At block 650, the augmentation engine 102 performs translation operations. The translation operations can be performed on the accumulated data. The translation operations can include, but are not limited to translating real-world coordinates to CAD model coordinates for each sensor 104. Accordingly, the augmentation engine 102 manipulates the non-standardized accumulated data into a standard form data that is usable by the augmentation engine 102.

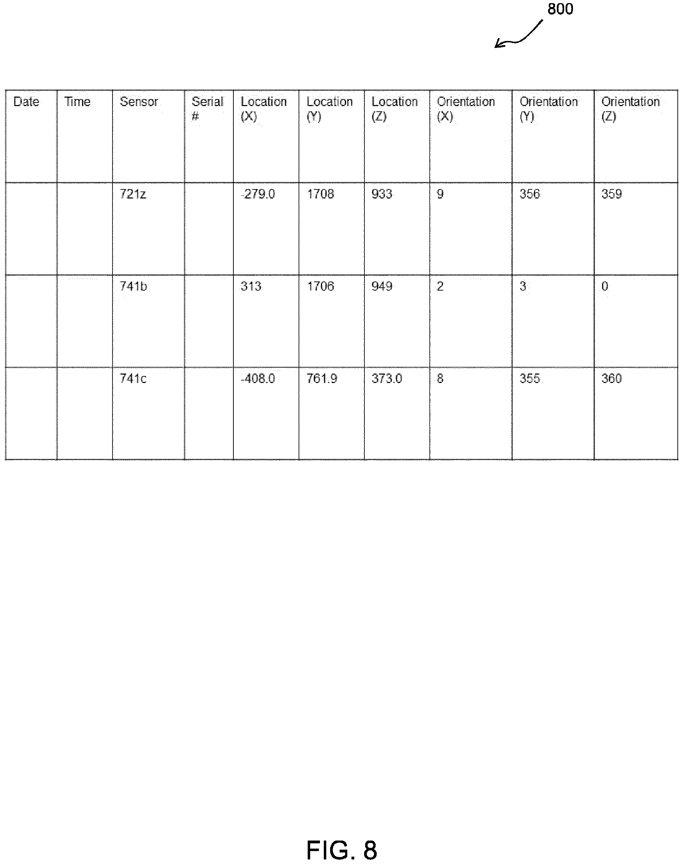

At block 673, the augmentation engine 102 generates a tabular report. The augmentation engine 102 can automatically generate the tabular report from the standard form data. The tabular report can be an 'as-run' report and can includes sensor placements with supporting data. As an example, FIG. 8 depicts a tabular report 800 according to one or more embodiments.

At block 674, the augmentation engine 102 generates a first model report. The first model report can be an automatically generated CAD model 'as-run' report from the standard form data. The automatically generated CAD model 'as-run' report can include sensor location and orientation placement data. According to one or more embodiments, the CAD model 151 can be automatically updated with a model of a sensor at a placed location and a placed orientation.

At block 675, the augmentation engine 102 generates a second model report. The second model report can be an automatically generated CAD model 'as-run' report from the standard form data. The automatically generated CAD model 'as-run' report can include supporting information for each sensor. According to one or more embodiments, the CAD model 151 can be automatically updated with supporting information on placed sensors. The supporting information for each sensor can include, but is not limited to, images with evidence on placement, placement timestamps, sensor bar codes, and cable bar codes.

At block 690, the augmentation engine 102 packages a report or final report. According to one or more embodiments, the report can be packaged for inclusion as part of test campaign results. As discussed herein, the report can include any 'as-run' reports and 'as-run' updated CAD models. The report can be archived for future analysis.

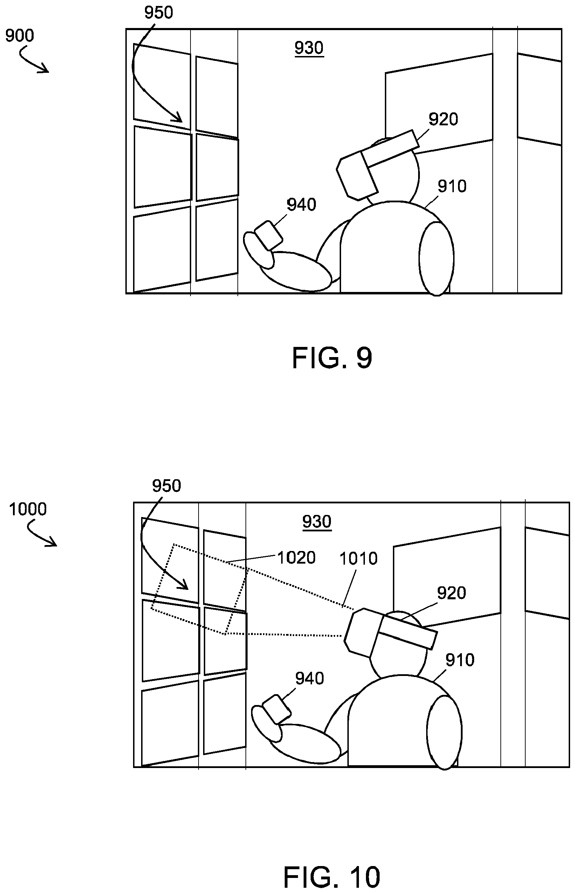

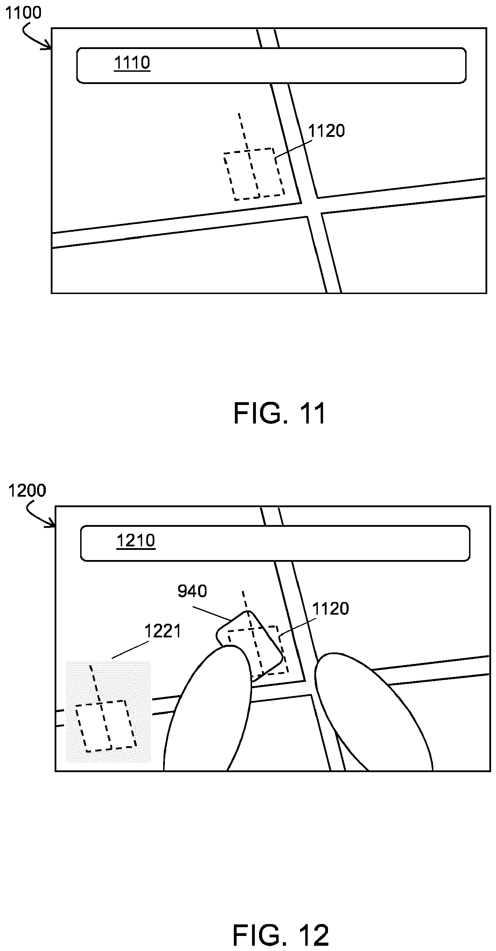

According to one or more embodiments, FIGS. 9-12 are shown as examples of the system 100 in practical use. FIG. 9 depicts an example environment 900 from a perspective view according to one or more embodiments. FIG. 10 depicts an example environment 1000 from a perspective view according to one or more embodiments. FIG. 11 depicts an example environment 1100 from a device view according to one or more embodiments. FIG. 12 depicts an example environment 1200 from a device view according to one or more embodiments.

The example environment 900 shows a user 910 wearing an AR headset 920 (e.g., the user device 103) in an advanced test/manufacturing facility 930. The user 910 is looking at a sensor 940, which needs to be placed on a candidate 950. The AT headset 920 includes the augmentation engine 102, which has and is executing an AR AIT preparation procedure generated and distributed by the AIT procedure generation engine 101.

The example environment 1000 shows a user 910 wearing the AR headset 920 (e.g., the user device 103) and looking to place the sensor 940 on the candidate 950. While looking at the candidate 950, the AR headset 920 has a line of site 1010 and a field of view 1020.

The example environment 1100 shows what the user 910 is seeing through the AR headset 920 (e.g., the user device 103), e.g., the field of view 1020. According to one or more embodiments, the example environment 1100 is shown in plain sight, while the AR headset 920 generates a popup instruction 1110 in the field of view 1020. The popup instruction 1110 can include details on a sensor placement (i.e., the sensor location 105). The example environment 1100 also shows an AR overlay 1120 of an exact location/orientation for a sensor placement (i.e., the sensor location 105). The AR headset 920 generates the AR overlay 1120 in the field of view 1020. According to one or more embodiments, the augmentation engine 102 receives sensor location and orientation information as part of the AR AIT preparation procedure and provides the AR overlay 1120 to show an exact location (e.g., X, Y, Z coordinates) and orientation (e.g., X', Y', Z' axis orientation)) of the sensor 940. The AR overlay 1120 can maintain a static position/orientation on the candidate 950 as the field of view 1020 changes with respect to the candidate 950.

The example environment 1200 shows hands of the user 910 placing the sensor 940 (e.g., the sensor 104) with the AR overlay 1120 of the exact location/orientation for the sensor placement. Additionally, a guiding image 1221 can also be produced in the view of the user. The AR headset 920 generates the guiding image 1121 in the field of view 1020. The guiding image 1221 can maintain a static position/orientation within the display of the AR headset 920 and, therefore, moves with as the field of view 1020 (e.g., while the AR overlay 1120 remain static with respect to the candidate 950).

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. A computer readable medium, as used herein, is not to be construed as being transitory signals per se, for example radio waves or other freely propagating electromagnetic waves, electromagnetic waves propagating through a waveguide or other transmission media (e.g., light pulses passing through a fiber-optic cable), or electrical signals transmitted through a wire

Examples of computer-readable media include electrical signals (transmitted over wired or wireless connections) and computer-readable storage media. Examples of computer-readable storage media include, but are not limited to, a register, cache memory, semiconductor memory devices, magnetic media such as internal hard disks and removable disks, magneto-optical media, optical media such as compact disks (CD) and digital versatile disks (DVDs), a random access memory (RAM), a read-only memory (ROM), an erasable programmable read-only memory (EPROM or Flash memory), a static random access memory (SRAM), and a memory stick. A processor in association with software may be used to implement a radio frequency transceiver for use in a terminal, base station, or any host computer.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method implemented by an augmentation engine executing on at least one processor, the method comprising:
implementing augmented reality assembly, integration, and testing preparation procedure that causes installation of one or more sensors with respect to a candidate under test;
acquiring data and information during the augmented reality assembly, integration, and testing preparation procedure, the data and information comprising placement information of the one or more sensors;
correlating the placement information of the one or more sensors with a computer-aided design model to provide an updated model; and
automatically generating one or more reports from the data and information and the updated model.

2. The method of claim 1, wherein the augmentation engine prompts instructions within a user device based on the augmented reality assembly, integration, and testing preparation procedure to cause installation of the one or more sensors.

3. The method of claim 1 or 2, wherein the placement information comprises one or more X, Y, Z coordinates corresponding to the one or more sensors.

4. The method of any of the preceding claims, wherein the placement information comprises one or more X', Y', Z' axis orientation to the one or more sensor.

5. The method of any of the preceding claims, wherein the data and information comprises an installation time, a sensor serial number, and a cabling serial number for the one or more sensors.

6. The method of any of the preceding claims, wherein the data and information is acquired through images, photos, or videos taken by a camera of a user device.

7. The method of any of the preceding claims, wherein the updated model comprises one or more exact location and orientation definitions of the one or more sensors relative to the computer-aided design model.

8. The method of any of the preceding claims, wherein the updated model comprises reporting data for the one or more sensors, images of the one or more sensors, bar codes of the one or more sensors, attached cables for the one or more sensors, and placement timestamps the one or more sensors.

9. The method of any of the preceding claims, wherein the one or more reports comprise as-run tabular report for each sensor placed of the one or more sensors.

10. The method of any of the preceding claims, wherein the one or more reports comprise an as-run updated computer-aided design model of a test campaign result.

11. A system comprising:
a memory storing processor executable code for an augmentation engine; and
at least one processor executing the processor executable code to implement the augmentation engine and cause the system to perform:
implementing augmented reality assembly, integration, and testing preparation procedure that causes installation of one or more sensors with respect to a candidate under test;
acquiring data and information during the augmented reality assembly, integration, and testing preparation procedure, the data and information comprising placement information of the one or more sensors;
correlating the placement information of the one or more sensors with a computer-aided design model to provide an updated model; and
automatically generating one or more reports from the data and information and the updated model.

12. The system of claim 11, wherein the augmentation engine prompts instructions within a user device based on the augmented reality assembly, integration, and testing preparation procedure to cause installation of the one or more sensors.

13. The system of claim 11 or 12, wherein the placement information comprises one or more X, Y, Z coordinates corresponding to the one or more sensors.

14. The system of any of the claims 11 to 13, wherein the placement information comprises one or more X', Y', Z' axis orientation to the one or more sensor.

15. The system of any of the claims 11 to 14, wherein the data and information comprises an installation time, a sensor serial number, and a cabling serial number for the one or more sensors.
